Europäisches Patentamt

European Patent Office

Office européen des brevets

(19)

(11) Publication number: **0 238 778**
**A2**

# EUROPEAN PATENT APPLICATION

(21) Application number: 86830295.1

(22) Date of filing: 09.10.86

(51) Int. Cl.⁴: **A61C 17/00**

(30) Priority: 28.03.86 IT 483186 U
28.03.86 IT 483286 U
28.03.86 IT 483386 U

(43) Date of publication of application:
30.09.87 Bulletin 87/40

(84) Designated Contracting States:
CH DE ES FR GR LI SE

(71) Applicant: CASTELLINI S.p.A.
Via Saliceto, 22
I-40013 Castelmaggiore (Bologna)(IT)

(72) Inventor: Castellini, Franco
Via Bellinzona, 60
I-40135 Bologna(IT)

(74) Representative: Lanzoni, Luciano
c/o BUGNION S.p.A. Via Farini, 37
I-40124 Bologna(IT)

(54) A scale remover with built-in light source.

(57) The grip (1) of the scale remover (6) is provided with a housing (7) that serves to accommodate means of illumination (13) the light from which is trained substantially on the tip of the scaling attach- ment (4), either by direct projection, or by deflection of the beam employing appropriate means (9) that emerge at the grip's forward end (2). Illumination means (13) are embodied to advantage as an electric lamp (8) held in place by means (29) designed to damp out oscillations set up by the vibrating shaft (3), and cooled by way of means (14) routed into the grip through a protective sheath (15) attached to its rear end.

FIG1b

FIG1a

## A scale remover with built-in light source

The invention described herein relates to a scale remover with a built-in light source.

In recent times, certain dentist's instruments have begun to be provided with their own light source for both economic and ergonomic reasons: on the one hand, powerful auxiliary lighting consumes a great deal of energy; on the other, conventional remote lighting illuminates an area far greater than that on which the dentist actually works, as well as constituting a source of irritation for both dentist and patient alike.

Also, with remote lighting, the source can become totally or partly obscured by the dentist while at work on the mouth of the patient, the result of which is reduced visibility at the treatment area. The problem is heightened further when treating hind teeth or deep cavities, and/or in situations where a patient may experience difficulty in opening his/her mouth (children, aged, disabled).

It will be appreciated, further, that the need often arises to re-position an overhead lamp during the course of treatment.

Moreover, with remote lighting, one is often unable to ensure local levels of luminous intensity as recommended by health and hygiene standards.

One of the various instruments as yet lacking any built-in light source, hence requiring the use of remote lighting, is that employed for the removal of scale, or tartar. Ideally, such an instrument should be of compact dimensions, especially at the forward end.

A further difficulty, which creates problems in the case of incorporating a light source into a scale remover, is that connected with the need to change the attachment (for the purpose of disinfection, or to adapt better to the work etc.), which is screwed onto the end of a vibrating shaft; different scaling attachments will not always assume the same angular position.

Accordingly, the object of the invention described herein is that of embodying a scale remover in such a way as will allow of incorporating a light source. The stated object is realized with a scale remover as characterized in the appended claims, the grip of which is provided with a housing that is designed to accommodate illumination means. The light produced can be trained on the tip of the scaling attachment either by direct projection or by deflection, in the latter instance, employing appropriate means that emerge at the forward end of the grip.

The illumination means are embodied to advantage as an electric lamp, directed toward the forward end of the grip, the light from which is distributed by deflection means encircling the vibrating shaft that carries the attachment.

One of the advantages of the invention consists in the fact of having maintained a compact diametral dimension of the instrument, notwithstanding the incorporation of a built-in light source.

A further advantage of the invention is that one can gain a faultless illumination of the treatment area, regardless of the angular position of the scaling attachment, by virtue of there being ultimately more than one light source.

A further advantage of the invention consists in the fact that a considerable concentration of light is obtained exclusively on the treatment area, and the direction of the beam of light can be adjusted to suit the position assumed by the attachment at any given moment.

An additional advantage of the invention consists in the absence of any dispersion of luminous energy, since the entire output is directed exclusively at the treatment area.

The invention will now be described in detail, by way of example, with the aid of the accompanying drawings, in which:

figs 1a and 1b illustrate side elevations of a first preferred embodiment of the scale remover according to the invention, in which certain parts are cut away better to reveal others;

fig 2 is the section through II-II in fig 1a;

fig 3 is the section through III-III in fig 1a;

fig 4 is the section through IV-IV in fig 1b;

fig 5 is the section through V-V in fig 1b;

figs 6a and 6b illustrate side elevations of a second preferred embodiment of the scale remover according to the invention, in which certain parts are cut away better to reveal others;

fig 7 is the section through VII-VII in fig 6a;

fig 8 is the section through VIII-VIII in fig 6a;

figs 9a and 9b illustrate side elevations of a third preferred embodiment of the scale remover according to the invention, in which certain parts are cut away better to reveal others;

fig 10 is the section through X-X in fig 9a;

fig 11 is the section through XI-XI in fig 9a;

fig 12 is the section through XII-XII in fig 9b;

fig 13 is the section through XIII-XIII in fig 9b.

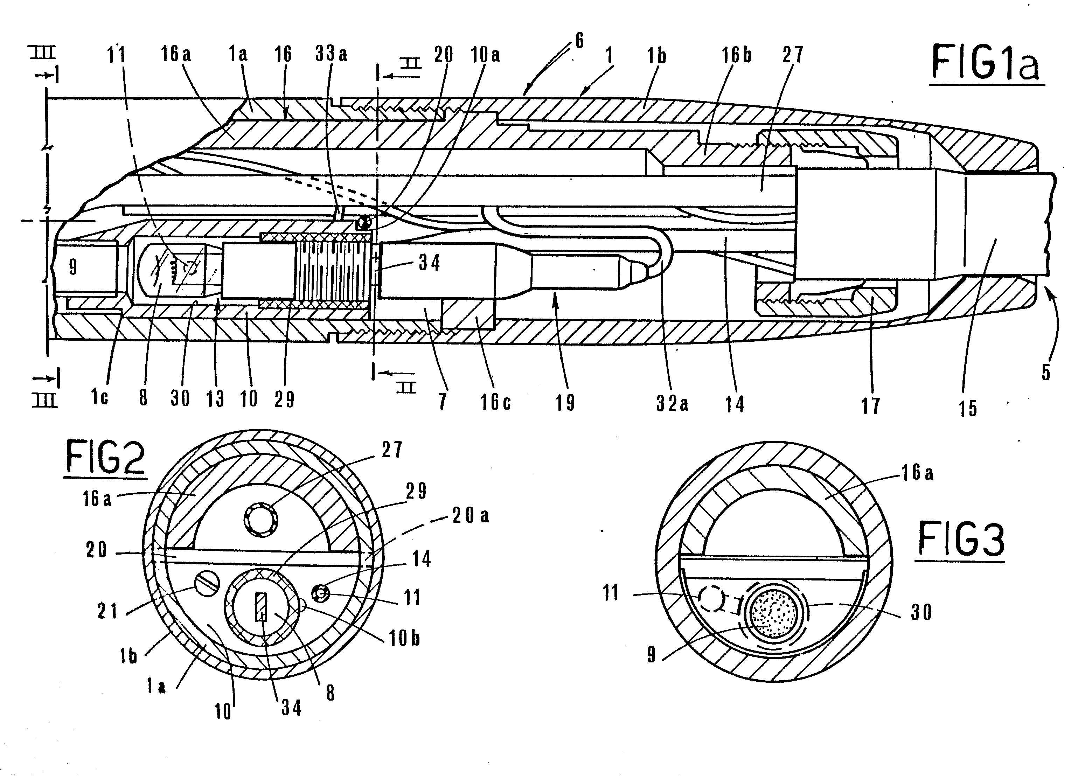

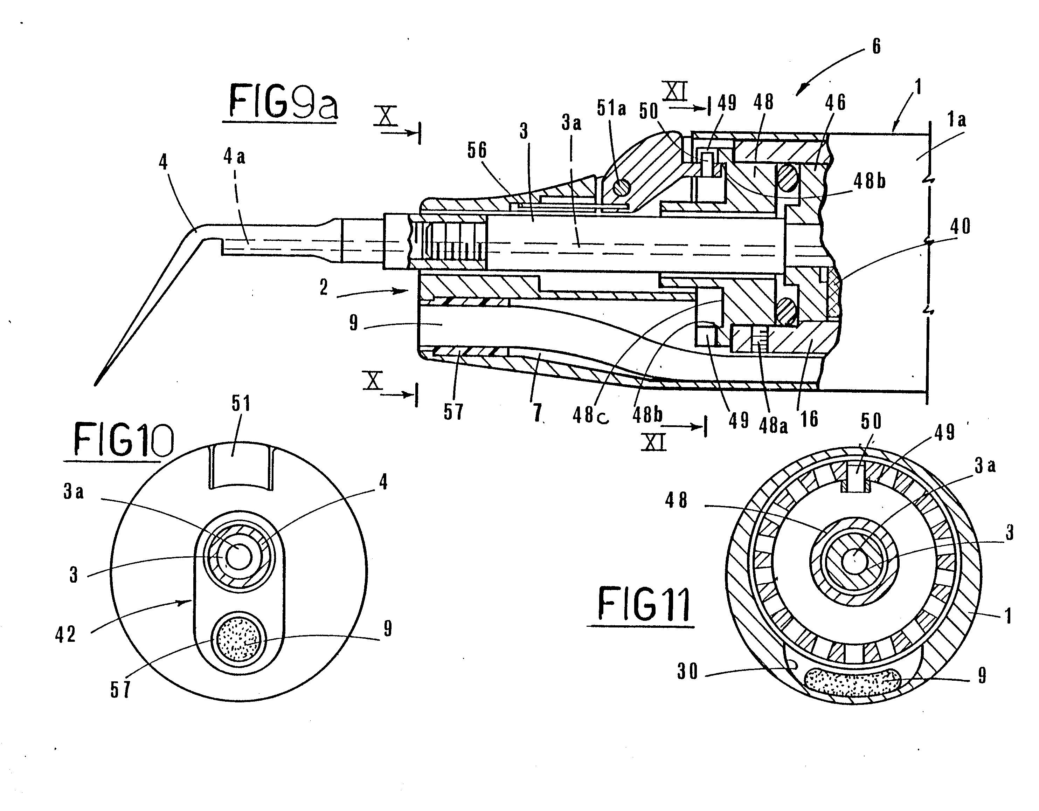

With reference to figs 1a and 1b, the scale remover, generally denoted 6, is of the type having a hollow grip 1 split into two sections, forward 1a and rear 1b, that are coaxial and fastened together, for example by way of a screw fit (see figs 1a and 9a). 40 denotes means, located internally of the grip 1, that impart vibration to a shaft 3 which is disposed coaxial with the grip 1 and exhibits a projecting end which is threaded for the purpose of fitting a scaling attachment 4. The vibrating shaft 3 and the attachment 4 have respective axial bores 3a and 4a; the bore denoted 3a connects directly with a tube 27 by way of which cooling water is supplied to the scaling attachment. 15 denotes a protective outer sheath accommodating the tube 27.

The vibrator 40 is conventional in embodiment, and therefore not described in detail

In fig 1a, the vibrator 40 is integral with a semi-annular body 16, one end 16a of which is fitted into and makes contact with the forward part 1a of the grip 1, the remaining end 16b fitting loosely into the rear section 1b of the grip 1. A central part 16c of the semi-annular body 16 is cylindrical, and of dimensions such as will allow of being clamped between the two sections 1a and 1b of the grip 1 when screwed together. The unrestricted stretch of the end denoted 16b is cylindrical, and combines with a locknut 17 in embodying a clamp fitting by means of which to anchor the sheath 15, which houses not only the tube 27, but also, a set of wires (not shown) carrying electrical power to the vibrator 40. The grip 1 of this first embodiment incorporates a longitudinal housing 7 located opposite the semi-annular body 16, which is designed to accommodate illumination means 13 consisting, for example, of an electric lamp 8, and of means 9 for deflecting the beam given off by the lamp.

The electric lamp 8 is held, by way of means 29 (see fig 1a) designed to damp out oscillations emitted by the vibrator 40, internally of a semi-cylindrical lampholder 10 that inserts into the forward section 1a of the grip at a point near to its join with the rear section 1b and is urged against a relief 1c offered by the forward section 1a. The lampholder 10 is held in place by a pin 20 that engages in coaxial holes 20a (see fig 2) located in the forward section 1a of the grip and is seated in an undercut 10a (see fig 1a) offered by the lampholder 10 itself at the end which faces toward the rear section 1b of the grip 1 at the side nearest the semi-annular body 16. The positive terminal 34 of the lampholder 10 is gripped by a clip-on type electrical connector 19 fastened to the end of a wire 32a issuing from the sheath 15, the remaining end of which is connected to conventional means (not illustrated) of switching the lamp 8. In a preferred embodiment, such means will be switched on either simultaneously with, or directly by the means which set the vibrator 40 in motion, though in such a way that the lamp 8 remains alight for a given period of time after vibration ceases, in order to permit of inspecting the treatment area.

The end of a second wire 33a, which passes likewise through the sheath 15 and constitutes the negative power supply line to the lamp 8, is made fast to the lampholder 10, for example, by way of a screw 21 (see fig 2).

11 denotes longitudinal hole in the lampholder 10, that connects with a tube 14 through which cooling air is pumped from remote means (not illustrated) for the purpose of keeping the lamp 8 at a given temperature; the tube 14 is accommodated by the protective sheath 15. The hole 11 emerges into the housing 30 of the lampholder 10 in which the light-shedding part of the lamp 8 is accommodated (see broken line of fig 3). Cooling air is directed into the grip 1 by way, for example, of a longitudinal opening 10b in the lampholder 10 created in the vibration damping means 29, and exhausted by way of a gap existing between the rear end 5 of the grip 1 and the sheath 15.

The means 9 for deflecting light shed by the lamp 8 can be embodied to advantage as a bundle of optic fibres, one end of which will be attached to the lampholder 10 directly in front of the lamp 8.

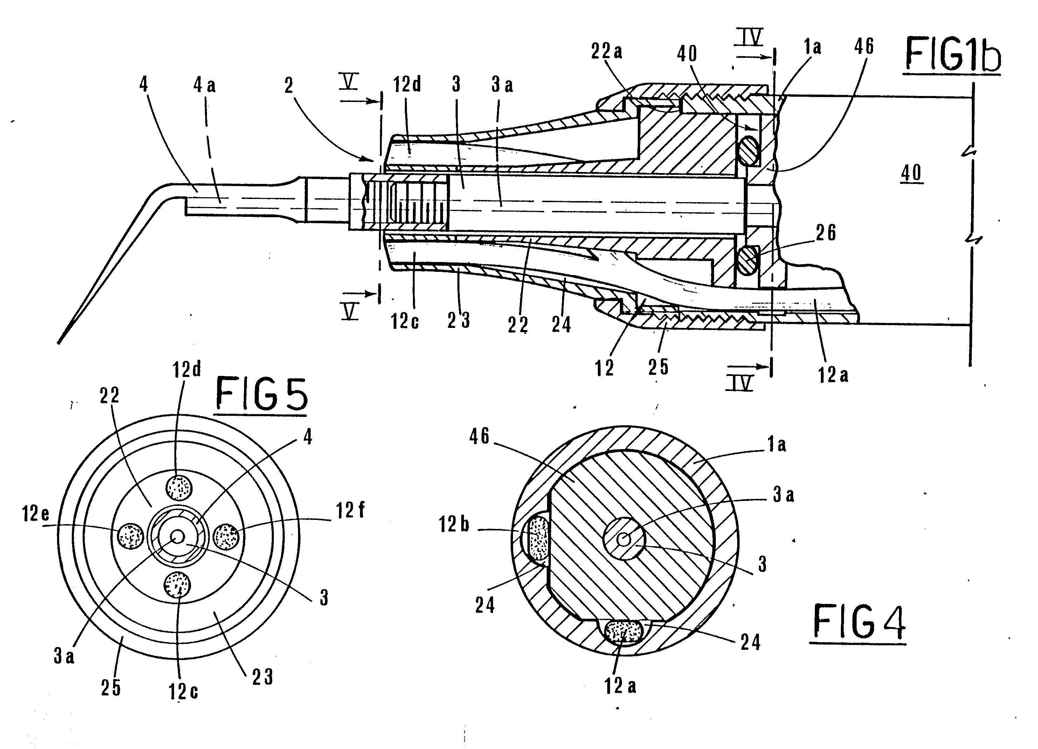

The bundle 9 splits into different branches 12 that emerge at the forward end 2 of the grip 1, and in a preferred embodiment, will divide first into two branches 12a and 12b that form an angle of 90° with the longitudinal axis of the grip (see fig 4), each of the two branches then splitting into a further pair of branches 12c-12d and 12e-12f, respectively, that will be diametrically opposed in relation to the vibrating shaft 3 (see fig 5).

The optic fibres 9 are supported by an inner cap 22, loosely ensheathing the vibrating shaft 3, and an outer cap 23. These create a set of channels 24 that converge initially on the vibrating shaft 3 in order to reduce the diametral proportions of the scale remover 6 at its forward end 2, and are then spread slightly, substantially in the direction of the tip of the attachment 4. The inner cap 22 is fitted into the forward section 1a of the grip 1 and pushed home to the point where its shoulder 22a locates against the front end of the forward section 1a. The outer cap 23 is slipped over the inner cap 22 and held firmly in position by a locknut 25 screwed onto an external thread offered by the forward section 1a. A seal 26, located between the inner cap 22 and the flange 46 that supports the vibrating shaft 3, serves to prevent leakage of cooling water from the axial bore 3a of the shaft 3 out onto the lamp 8. With a scale remover 6 embodied thus, the tip of the scaling attachment 4 may occupy any given angular position and still be illuminated. The arrangement of the optic fibres 9 is such, in fact, as to cover the entire annular area in which the tip of the attachment 4 may happen to be positioned.

To improve illumination of the treatment area still further, the bundled optic fibres 9 may be split into a yet greater number of branches 12, in such a way as to create what in practical terms will be an unbroken loop of light shed from around the shaft 3. Thus, one manages to keep the dimensions of the grip within limits eminently comparable to those of a conventional scale remover without its own light source, particularly at the point where the scaling attachment is screwed onto the shaft.

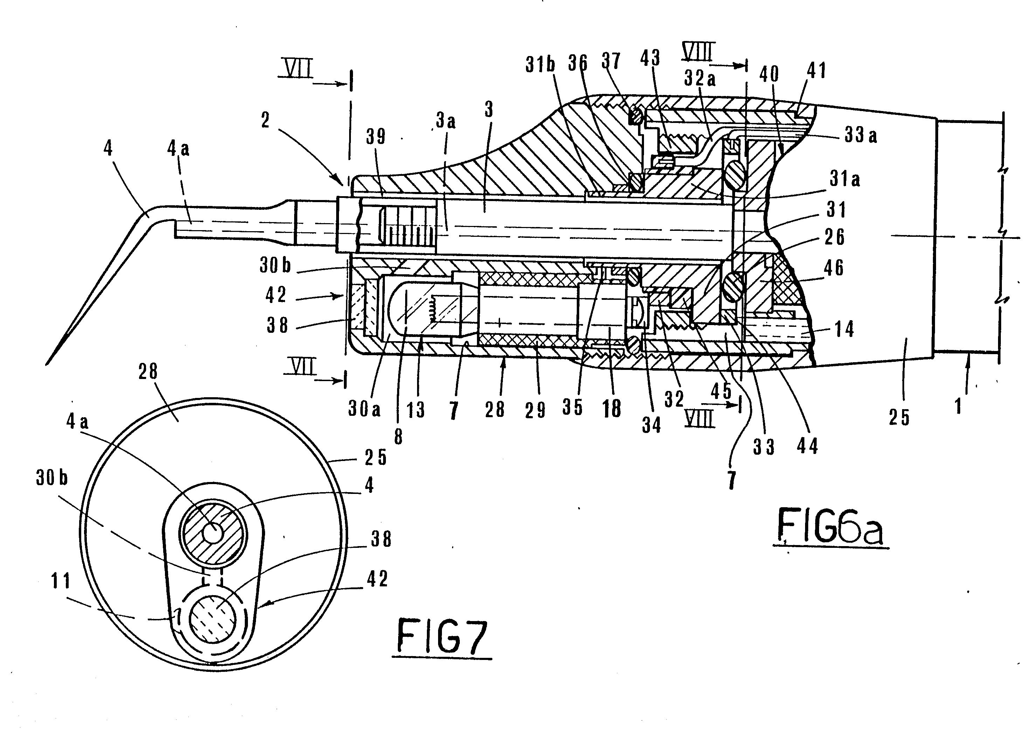

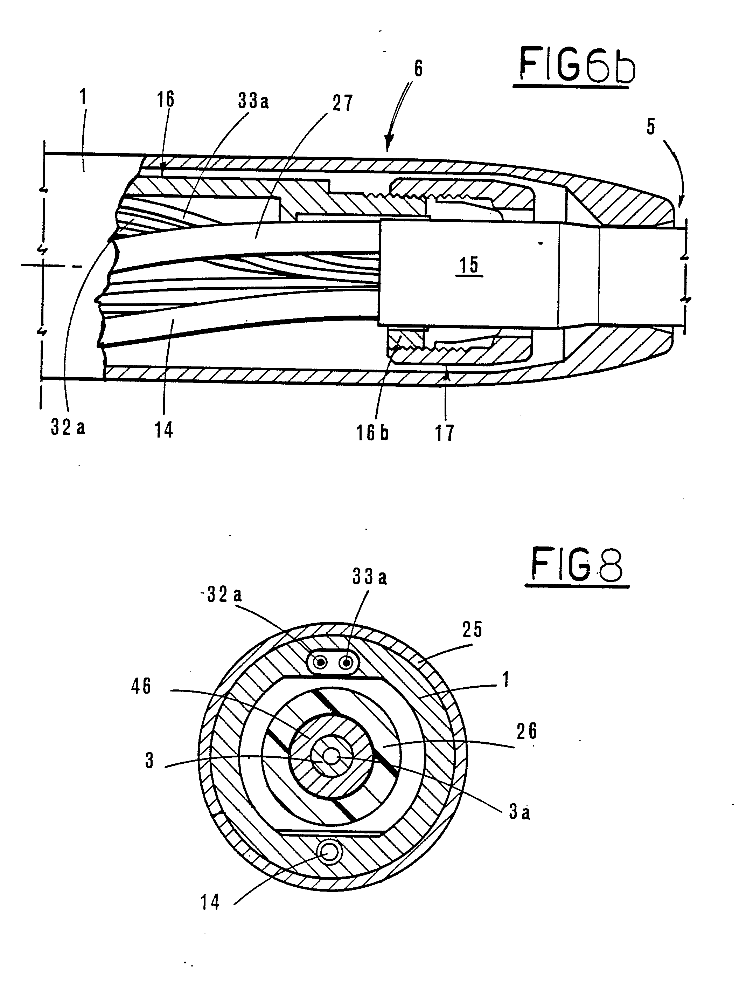

In the second embodiment illustrated in figs 6a...8, the grip 1 of the scale remover has a hollow body 28 fitted to its forward end, ensheathing the vibrating shaft 3 and serving to support illumination means, again denoted 13.

The hollow body 28 is substantially cylindrical in shape, and is threaded at the end offered to the grip 1; this threaded end is engaged by a screw-on locking collar 25 that slides over the grip 1 to the point of its abutting, via an internal shoulder, with an external shoulder 41 offered by the grip. The hollow body 28 exhibits a forward taper, except at the section denoted 42 (see fig 7), internally of which one has a longitudinal housing 7 accommodating the illumination means.

The illumination means 13 are embodied to advantage as an electric lamp 8 accommodated by the housing and lodged within means 29 (see 6a) designed to damp out the oscillations transmitted by the vibrating shaft 3.

31 denotes a retaining collar fitted loosely over the vibrating shaft 3 between the hollow body 28 and a flange 46, which serves to position two slip ring contacts, positive 32 and negative 33; the collar 31 is embodied in conductive material and exhibits a radial section substantially in the form of a letter 'L' the shank of which is directed toward the hollow body 28. 43 denotes an externally threaded locknut that engages a corresponding internal thread offered by the grip 1, and clamps the retaining collar 31 against the negative slip ring contact 33, which in turn is clamped against a relief 44 offered by the grip 1; the negative contact 33 is connected to a wire 33a running longitudinally through the grip 1. The positive slip ring contact 32 is fitted over an insulator 45 that ensheaths the smaller diameter section 31a of the retaining collar 31, and is thus isolated from the collar 31 and from the rest of the grip; power is supplied to the contact 32 by way of a wire 32a running longitudinally through the grip alongside the negative wire 33a. The two wires are routed out through the sheath 15 and connected by their two remaining ends to power supply means (not illustrated) remote from the grip 1. The positive slip ring contact 32 is held in place by the sprung positive terminal 34 of a separator 18 integral with the lamp 8, whereas the negative terminal 35 of the separator 18 slides against the surface of a thin cylindrical extension 31b of the retaining collar 31 which, it will be recalled, is urged firmly into contact with the negative slip ring contact 33.

14 denotes a tube, running longitudinally through the grip 1 and accommodated by the protective sheath 15, through which cooling air is supplied to the electric lamp 8. The air reaches the lamp via a longitudinal hole 11 emerging into the section 30a of the housing 7 of the hollow body 28 (see fig 6a) that accommodates the light-shedding part of the lamp 8. Viewed in cross section, the longitudinal hole 11 will be seen to be bounded on one side by an opening machined in the hollow body 28 that departs from the longitudinal housing 7, and extends the remainder of the length of the vibration damping means 29.

The longitudinal housing 7 is stopped at its outer end by a fitted lens 38 (serving to focus, or spread the beam) set coaxial with the lamp 8, and connects with the axial bore 39 of the hollow body 28 that accommodates the vibrating shaft 3 by way of a gallery 30b that is angled toward the grip 1 and serves to limit pressure of the air vented via the bore 39.

This second embodiment of the scale remover 6 also comprises a set of seals 26, 37 and 36 which are located respectively between the retaining collar 31 and the flange 46, between the separator 18 and the grip 1, and between the separator 18 and the collar 31; these serve to prevent cooling water (supplied to the attachment 4) from reaching the lamp 8, or worse yet, from reaching the slip ring contacts 32 or 33.

In a preferred embodiment, the wires 32a and 33a will be connected to means (not shown) whereby power supply to the lamp is switched either simultaneously with, or directly by, the means that activate the vibrator, and in such a way that the lamp remains alight for a given period of time after the vibrator has been deactivated, as aforementioned. The dentist can thus make use of the light source to inspect the treatment area, since the attachment 4 is rendered motionless and constitutes no potential danger to the patient.

This second embodiment of a scale remover according to the invention is thus able to provide optimum illumination of the treatment area. In the event that the area lit does not coincide with the area treated (e.g. following a change of attachment) it will suffice to loosen the locking collar 25, rotate the hollow body 28 until light is shed on the tip of the attachment, and re-tighten the collar 25. Power supply to the electric lamp 8 is ensured during such rotation by the two slip ring contacts 32 and 33, against which the relative terminals 34 and 35 of the separator 18 are caused to slide, directly or indirectly.

The entire output of luminous energy provided by the lamp 8 is exploited to light the treatment area, directly and exclusively; what is more, the shape of the hollow body 28 is such that the dimensions of the entire grip are kept within more than acceptable limits, particularly at the forward end.

In a third embodiment of the scale remover, the body denoted 16 is cylindrical and centrally located (see fig 9a), and incorporates a threaded section nearest the rear end 5 of the grip 1 which engages a sleeve 54, provided with internal and external threads and slotted with diametral cuts so as to combine with a locknut 17 in creating a clamp fitting by means of which to anchor the end of the protective sheath 15. The grip 1 of this particular embodiment is provided with an offset longitudinal bore 58 that is breasted with the outer surface of the central cylindrical body 16 and rotatable about its axis.

7 denotes an offset longitudinal housing passing through the grip 1, which exhibits a cross section of varying shape and dimensions and is designed to accommodate illumination means 13 the light from which emerges at the forward end of the grip 1 and is directed at the tip of the attachment 4.

The illumination means 13 are supplied with power from a remote source via two wires 32a and 33a routed into the grip through the protective sheath 15 and connected to respective slip ring contacts 32 and 33. The one contact 33 is fitted over a reduced section 16a of the central body 16, whereas the remaining contact 32 is fitted over an insulator 55, this in its turn fitted over the self-same reduced section 16a. The cross section of the insulator 55 is such that the one contact 32 remains isolated both from the other contact 33 and from the central body 16. The slip ring denoted 33 and the insulator 55 are clamped over the reduced section 16a of the central body by tightening the threaded sleeve 54 which, to avoid the hazard of short circuit, can either be embodied entirely in insulating material, or be provided with a ring of insulating material (not illustrated) at the end bordering on the nearer contact 32.

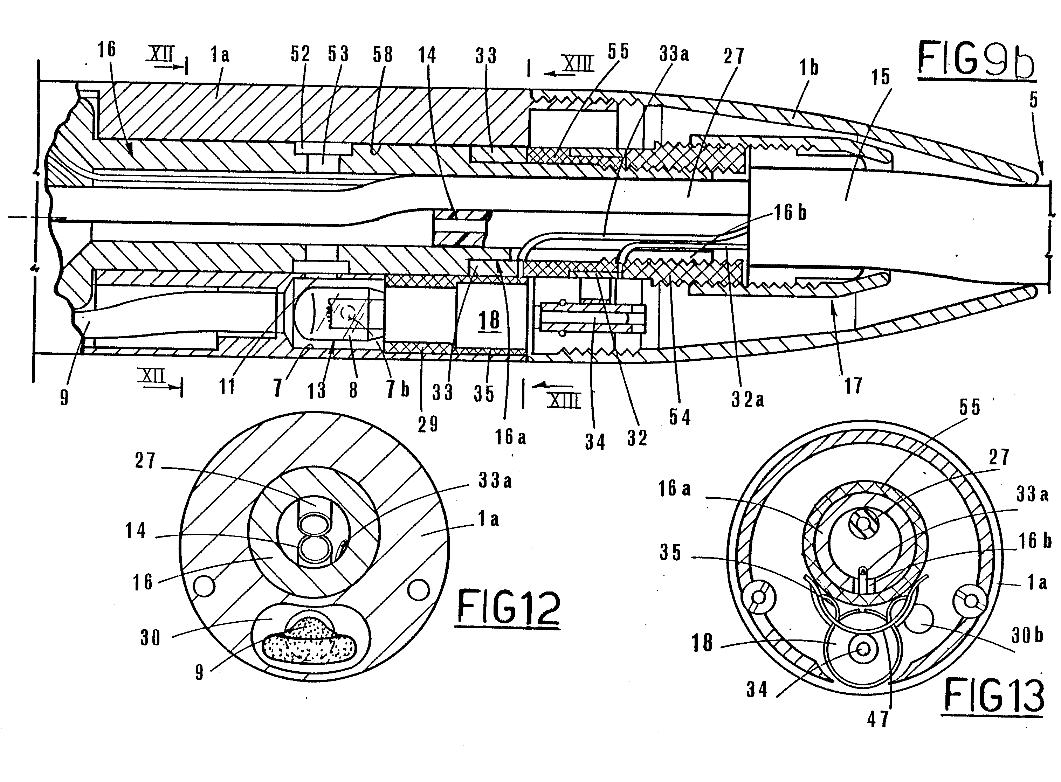

The illumination means 13 of this third embodiment illustrated consist in an electric lamp 8, and means 9 for deflection of the light shed by the lamp. The electric lamp 8 is once again lodged internally of means 29 designed to damp out oscillations from the shaft vibrator 40, and occupies a stretch of the housing 7 in the forward section 1a of the grip 1 near to its point of union with the rear section 1b. The lamp 8 is attached to a separator 18 provided with a flat negative terminal 35 exhibiting 'omega' shape (see fig 13), the unattached ends of which are urged permanently into contact with the negative slip ring contact 33. The positive terminal 34 takes the form of a pin (see also fig 13) engaged with a sliding contact 47 exhibiting the shape of a letter 'C' the unattached ends of which slide against the relative slip ring contact 32. The two slip ring contacts 32 and 33 and the insulator 55 are embodied to best advantage with identical external diameter. The wires 32a and 33a carrying electrical power to the lamp 8 are connected to supply means (not shown) at a location remote from the scale remover 6. Such means will be switched either simultaneously with or directly by the means which activate the vibrator, in such a way that the lamp 8 remains alight for a given period of time following deactivation of the vibrator, thereby enabling safe inspection of the treatment area using the scale remover's built-in light source.

16b denotes a longitudinal groove located in the central body 16 (see fig 9b) that serves to house the wires 32a and 33a supplying power to the lamp, and 52 denotes an external annular undercut in the central body 16, which is located at the point where a radial hole 11 in the grip 1 connects the housing 7 with the interior of the central body by way of a plurality of radial holes 53 located in the body itself.

The radial hole 11 emerges into that section of the housing 7 which accommodates the light-shedding part of the lamp 8. The grip 1 also incorporates a second substantially longitudinal housing 7b (see fig 9b) that departs from the housing 7 alongside the light-shedding part of the lamp 8 and emerges, internally of the grip 1, toward the rear end 5 (see fig 13). In addition to the coolant tube 27 and the wires 32a and 33a, the protective sheath 15 accommodates a tube 14 through which cooling air is supplied to the lamp 8. The tube 14 emerges into the central body 16 alongside the radial holes 53, such that air reaches the lamp 8 by way of the holes 53, the undercut 52, and the radial hole 11 in the grip, and is vented toward the rear section of the grip 1 by way of the second housing 7b, thence out from the grip by way of the gap existing between the protective sheath 15 and the rear end 5.

48 denotes a flange attached to the forward end of the central body 16, for example with screws 48a, and provided with a plurality of locating elements, appearing in figs 9a and 11 as radial slots 49, that can be engaged singly by a locking element, which in fig 9a appears in the form of a pin 50. The pin 50 is attached to one end of a button 51 hinged at its remaining end to the grip 1 about an axis denoted 51a such that the button 51 rotates within a plane extending radially from the axis of the vibrating shaft 3. The flange 48 incorporates an annular socket 48c exhibiting depth greater than that of the radial slots 49, measured through the longitudinal dimension of the vibrating shaft 3, the purpose of which is to provide a stop 48b against which the end of the button 51 carrying the pin 50 may locate. 56 denotes tension means associated with the button 51, e.g. a flat spring seated in a corresponding slot in the grip 1, which are designed to bias the button 51 toward the position whereby it locates firmly in the single slot 49.

The grip 1 tapers away from the flange 48 toward the forward end 2 of the grip 1 (see fig 9a), where it exhibits a flattened section 42 that supports the vibrating shaft 3 and accommodates a bundle of optic fibres 9 disposed parallel to the shaft and attached to the forward end 2 by way of means 57 designed to damp out vibration during operation of the scaling attachment. The bundle of fibres 9 exhibits circular cross section at either end (figs 9a, 9b, 10 and 12) whereas the intermediate stretch which flanks the vibrator 40 is embodied with flattened cross section (figs 9a, 9b, 11 and 12), in order that the extent to which the central body 16 is offset from the axis of the grip 1 may be limited as far as possible. It will be observed from fig 9a that the profile of the button 51 follows the generally tapered lines of the grip 1.

With a scale remover 6 thus embodied, the attachment 4 can be changed in conventional manner with the grip grasped in one hand, whereupon, laying hold firmly on the attachment and pressing the button 51, the grip 1 can be rotated about the central body 16 (which moves as one with the attachment) in such a way as to bring the luminous beam emitted by the optic fibres 9 to the position in which light is shed on the tip of the attachment, i.e. where it is effectively required.

In this embodiment of the scale remover, the pin 50 and the slots 49 are indispensable for the purpose of changing the attachment 4; such a necessity is turned to considerable advantage during the course of treatment, however, inasmuch as rotation of the grip 1 relative to the central body 1 is prevented, and there can be no accidental loss of light from the treatment area.

As in the case of the first and second embodiments illustrated, the entire output of luminous energy provided by the lamp 8 in this third embodiment is utilized to light the treatment area, directly and exclusively; what is more, the shape of the forward section 1a, the arrangement of the optic fibres 9, and the embodiment of the flattened section 42 at front, combine in maintaining the dimensions of the entire grip within more than acceptable limits.

## Claims

1) Scale remover with a built-in light source, of the type comprising a hollow grip (1) accommodating a vibrating shaft (3) that projects from its forward end (2) and carries a scaling attachment (4), and associating via its rear end (5) with a protective sheath (15) which accommodates wires that carry electrical power to the scale remover (6), and a tube (27) carrying cooling water to the attachment; characterized

in that it comprises a longitudinal housing (7), located internally of the grip (1), which serves to accommodate illumination means (13) the light from which issues at the forward end of the grip and is directed substantially at the tip of the attachment (4) either directly, or by way of means (9) for deflection of the luminous beam;

in that the illumination means (13) are supplied with electrical power by relative means (32a, 33a) accommodated, together with means (14) for cooling the illumination means, by the protective sheath (15);

in that the illumination means (13) are accommodated within the housing (7), and internally of means (29) designed to damp out oscillations transmitted by the vibrating shaft (3); and

in that at least the light-shedding part (12, 38, 9) of the illumination means (13) is able to assume a plurality of positions about the vibrating shaft (3) either concurrently or in turn.

2) Scale remover as in claim 1, wherein illumination means (13) are located adjacent to the rear end (5) of the grip (1) and consist in an electric lamp (8) that occupies a fixed position in relation to the grip and is directed toward its forward end (2), the light from which is distributed by deflection means (9) that extend from the lamp and are split into a number of branches (12) that emerge at the forward end (2) of the grip and encircle the vibrating shaft (3); and wherein the lamp (8) is made fast to a lamp holder (10) connecting with the cooling means (14).

3) Scale remover as in claim 2, wherein the single branches (12) of the means (9) for deflection of the light shed by the lamp (8) terminate collectively alongside and encircle the vibrating shaft (3) in such a way as to create a light source in the form of a substantially unbroken loop.

4) Scale remover as in claim 2, wherein the single branches (12) of the means (9) for deflection of the light shed by the lamp are at least two in number, set apart at a given angular distance in relation to the vibrating shaft (3) such as to create at least two distinct light sources.

5) Scale remover as in claim 2, wherein means (9) for deflection of the light shed by the lamp (8) are split into two branches (12a, 12b) that form a right angle with the axis of the grip (1), and wherein each such branch splits further into a respective pair of branches (12c, 12d - 12e, 12f) located in diametrical opposition either side of the vibrating shaft (3) and disposed at a given angular distance from the remaining pair.

6) Scale remover as in claim 5, wherein the branches (12) of means (9) for deflection of the light shed by the lamp (8) are accommodated within respective channels (24) created between an inner cap (22) and an outer cap (23) both of which are connected to the forward end of the grip.

7) Scale remover as in claim 2, the lampholder (10) of which exhibits holes (11, 10b) that emerge into the housing (7) in which the light-shedding part of the lamp (8) is accommodated, wherein one such hole connects with the cooling means (14), embodied as a tube supplying cooling air to the lamp, and the other hole emerges into the interior of the grip.

8) Scale remover as in claim 1, wherein the grip (1) comprises a hollow body (28) attached to its forward end (2), serving to elongate the housing (7) and accommodate the illumination means (13), by which the vibrating shaft (3) is loosely ensheathed so as to permit of adjusting the angular position of the grip in relation to the shaft.

9) Scale remover as in claim 8, wherein illumination means (13) consist in an electric lamp (8) that is made fast internally of the housing (7) offered by the hollow body (28), held in place by means (29) designed to damp out oscillations transmitted by the vibrating shaft (3), and directed at the tip of the attachment (4); wherein the lamp (8) is supplied with electrical power by way of contact means (32, 33) that connect the terminals of the lamp (8) to respective power supply means (32a, 33a) running longitudinally through the grip (1) and routed away internally of the protective sheath (15); and wherein the contact means (32, 33) are isolated by appropriate sealing means (26, 36, 37) from cooling water supplied to the scaling attachment (4).

10) Scale remover as in claim 9, wherein the contact means (32, 33) are of a slip ring type, comprising a collar (31) for retention of two slip ring contacts insulated one from the other and engaged in sliding contact with the positive and negative terminals of the lamp, respectively, and protected from cooling water supplied to the scaling attachment (4) by seals (26, 36, 37) occupying positions adjacent to the retaining collar (31), the hollow body (28) and the grip (1).

11) Scale remover as in claim 9, wherein the hollow body (28) is coaxial with the grip (1), and attached thereto by means of a coaxially disposed, threaded locking collar (25) fitted loosely over the grip, located against a shoulder (41), and made fast by screwing to the external surface of the hollow body (28) itself.

12) Scale remover as in claim 9, wherein the longitudinal housing (7) of the hollow body (28) that accommodates the electric lamp (8) is stopped at its outer end by a lens (38) disposed coaxial with the lamp.

13) Scale remover as in claim 9, wherein the longitudinal housing (7) of the hollow body (28) that accommodates the electric lamp (8) connects with a tube (14) that forms part of the cooling means by way of which air is supplied to the lamp, and vents to an axial bore (39) in the hollow body (28), by which the vibrating shaft (3) is accommodated, and wherein the tube (14) runs longitudinally through the grip (1) and is routed away internally of the protective sheath (15).

14) Scale remover as in claim 1, the protective sheath (15) of which is anchored to the rear end (16b) of a central cylindrical body (16) supporting means (40) by which vibration is imparted to the shaft (3), wherein the grip (1) is made fast to the outer surface of the central body (16), disposed coaxial therewith and rendered rotatable about the axis thereof in order to permit of adjusting the relative angular positions of grip and body, and accommodates illumination means (13) internally of and rotated as one with the section asjacent to its rear end (5), the light from which is conveyed by deflection means (9) to the forward end (2) of the grip and directed substantially at the tip of the attachment (4).

15) Scale remover as in claim 14, the illumination means (13) of which are supplied with electrical power by way of a pair of terminals (47, 35) that slide against a pair of slip ring contacts (32, 33) fitted to the central body (16) and connected to respective electrical power supply means (32a, 33a) routed into the grip by way of the protective sheath (15).

16) Scale remover as in claim 14, the illumination means (13) of which consist in an electric lamp (8) set toward the forward end (2) of the grip, the light from which is conveyed by deflection means (9) which emerge at the forward end of the grip, wherein the lamp (8) is ensheathed by a separator (18) the terminals (35, 34) of which slide either directly or indirectly against the slip ring contacts (33, 32) fitted to the central cylindrical body (16).

17) Scale remover as in claim 14, wherein the central cylindrical body (16) is integral with a flange (48) provided with locating elements (49) that may be engaged singly by a corresponding locking element (50) associated with the grip (1).

18) Scale remover as in claim 17), wherein the locating elements (49) of the flange (48) consist in a plurality of radial slots that may be engaged singly by the locking element (50), which takes the form of a pin associated with the grip (1) in such a way as to enable its movement toward and away from the radial slots (49) of the flange (48).

19) Scale remover as in claim 18, wherein the radial slots (49) of the flange (48) are frontally disposed and directed toward the forward end (2) of the grip.

20) Scale remover as in claim 18, wherein the pin (50) is disposed substantially in a radial position with respect to the vibrating shaft (3) and is integral with a button (51) hinged to and spring-loaded against the grip.

21) Scale remover as in claim 17, wherein the flange (48) and the locking element (50) are positioned at the forward end (2) of the grip (1).

22) Scale remover as in claim 14, wherein the grip (1) exhibits circular cross section and tapers into a flattened cross section toward its forward end (2), and comprises an offset longitudinal bore (58) accommodating the central cylindrical body (16), and a substantially peripheral longitudinal housing (7) exhibiting cross section of varying dimensions and shape, the purpose of which is to accommodate the illumination means (13) and deflection means (9).

23) Scale remover as in claim 16, wherein the central cylindrical body (16) is provided with an axial bore, and exhibits a set of radial holes (53) communicating with a single radial hole (11) in the grip that emerges into the housing (7) accommodating the electric lamp; wherein the grip is provided further with a substantially longitudinal vent (30b) departing from the housing (7) accommodating the lamp (8) and emerging internally of the grip at its rear end (5); and wherein means (14) by which the illumination means (13) are cooled consist in a tube via which air reaches a point inside of the central body (16) and adjacent to the radial holes (53).

24) Scale remover as in claim 1, the illumination means (13) of which are operated by switching means that are interlocked to the means which activate the vibrator (40) in such a way that the electric lamp (8) will remain alight for a given period of time following deactivation of the vibrator.

25) Scale remover as in claim 1, wherein means (9) for deflection of the light shed by the lamp (8) are embodied as bundles of optic fibres.

0 238 778

**FIG1a**

III  11  16a  1a  16  33a  II  20  10a  6  1  1b  16b  27

9  34

III  1c  8  30  13  10  29  I  7  16c  19  32a  14  17  15  5

**FIG2**

16a  27  29  20a

20  14

21  11

1b  10b

1a

10  34  8

**FIG3**

16a

11  30

9

FIG 1b

FIG 4

FIG 5

VII

VIII

31b 36 37 43 VIII
32a 40 41

2 3a 3 33a

39 31a
31
26
30b 46

42
38 14

30a 13 7 28 29 35 18 32 45 25 1
8 34 VIII
33 44

7

**FIG6a**

28

4a

30b 25
4
38
11 42

**FIG7**

0 238 778

## FIG 6b

1 16 33a 27 6 5

15

32 a 14 16 b 17

## FIG 8

33 a
32 a 25
46 1
3 26
14 3 a

FIG9a

FIG10

FIG11

0 238 778

FIG9b

FIG12

FIG13